# EUROPÄISCHE PATENTSCHRIFT

(11) **EP 3 914 133 B1**
(45) Veröffentlichungstag und Bekanntmachung des Hinweises auf die Patenterteilung: **22.02.2023**
(21) Anmeldenummer: 20700428.4
(22) Anmeldetag: 07.01.2020
(51) Int. Cl.: A47J 43/07, A47J 43/044

(54) **MESSER FÜR EINEN MIXER**
BLADE MEANS FOR A MIXER
COUTEAU POUR UN MIXEUR

(30) Priorität: 25.01.2019 DE 102019101823
(43) Veröffentlichungstag der Anmeldung: 01.12.2021
(73) Patentinhaber: Zwilling J. A. Henckels AG, 42657 Solingen (DE)
(72) Erfinder: BAUMANN, Wolfgang, 59469 Ense (DE); THYSSEN, René, 58332 Schwelm (DE)
(74) Vertreter: karo IP
(86) Internationale Anmeldenummer: PCT/EP2020/050152
(87) Internationale Veröffentlichungsnummer: WO 2020/151935

(56) Entgegenhaltungen:
- EP-A1- 2 679 122
- DE-U1-202010 008 152
- US-A1- 2017 208 999
- US-B2- 9 750 372

## Beschreibung

Die vorliegende Erfindung betrifft ein Messer für einen Mixer, z. B. Stabmixer oder Standmixer. Mixer werden im Haushalt und/oder in der Gastronomie regelmäßig zum Zerkleinern und/oder Pürieren und/oder Mischen von Lebensmitteln verwendet.

Mixer umfassen regelmäßig rotierende Messer. Derartige Messer umfassen zumeist eine zentral angeordnete Öffnung, in der z. B. eine Antriebswelle für die Rotation der Messer eingeführt wird. Die Messer weisen daher zumeist mindestens zwei der Öffnung gegenüberliegende Messerabschnitte auf, die jeweils in einer Umfangrichtung ausgerichtete Schneiden aufweisen. Es sind auch Messer bekannt, die nicht nur zwei, sondern drei, vier oder mehr Schneiden aufweisen. Die Anordnung der Messerabschnitte erfolgt insbesondere so, dass die Rotation ohne Unwucht möglich ist. Es sind auch mehrteilige Messer bekannt, wobei Messerelemente (lösbar) miteinander ein Mehrschneiden-Messer bilden.

Eine gattungsgemäße Ausgestaltung rotierender Messer eines Mixers geht beispielsweise aus der US 9 750 372 B2 hervor. Dort werden eine Klingenanordnung für einen Mixer und eine Welle, die die Klingenanordnung hält, von einem zentralen Lagergehäuse bzw. einer Nabe getragen. Die Klingenbaugruppe umfasst ferner drei Hauptschaufeln, die aus einem einzigen Rohling oder Körper geformt sind, und darüber beabstandet drei kürzere obere Klingen, die ebenfalls aus einem einzigen Rohling bestehen. In bevorzugten Ausführungsformen sind die Hauptschaufeln in einem Abstand von 120 Grad zueinander angeordnet, die oberen Klingen werden kalt gepresst oder tiefgezogen, um eine endgültige Form zu erhalten, und in einem Abstand von 120 Grad zueinander angeordnet. Der Winkelversatz zwischen den Hauptklingen und den vorzugsweise kürzeren Oberklingen beträgt z. B. 60 Grad. Die oberen Klingen haben vorzugsweise gezackte Vorderkanten. Jede Klinge ist in Bezug auf die Horizontale unterschiedlich geneigt.

Ähnliche Anordnungen von rotierenden Messern bei einem Mixer gehen aus der DE 20 2010 008152 U1, der US 2017/208999 A1 und der EP 2679122 A1 hervor.

Die Schneidleistung der Messer hängt insbesondere von ihrer Schärfe ab. Je größer die Schärfe des Messers, desto größer ist die Schneidleistung. Rotierende Messer für Mixer werden bislang stumpf geschliffen, da scharf geschliffene Schneidkanten von rotierenden Messern beim Auftreffen auf hartem Schnittgut leicht brechen können. Dies kann schließlich zu einem Bruch des Messers führen. Eine hohe Betriebssicherheit geht daher in nachteiliger Weise mit einer geringen Schneidleistung einher.

Aufgabe der Erfindung ist es daher, die mit Bezug auf den Stand der Technik geschilderten Probleme zumindest teilweise zu lösen und insbesondere ein Messer für einen Mixer anzugeben, das eine hohe Betriebssicherheit und gleichzeitig eine hohe Schneidleistung aufweist.

Diese Aufgaben werden gelöst mit einem Messer gemäß den Merkmalen des unabhängigen Patentanspruchs. Weitere vorteilhafte Ausgestaltungen des Messers sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Messer für einen Mixer mit zumindest den folgenden Merkmalen bei:
- eine Drehachse,
- zumindest eine Klinge, die sich ausgehend von der Drehachse erstreckt und zumindest eine Schneide aufweist, und
- eine Mehrzahl von Wellen, die in der zumindest einen Schneide ausgebildet sind, wobei die einzelnen Wellen voneinander jeweils durch einen flachen Abschnitt der zumindest einen Schneide beabstandet sind,
- wobei der flache Abschnitt der zumindest einen Schneide eine geringere Schärfe aufweist als die Wellen.

Bei einem Stabmixer handelt es sich insbesondere um ein Küchengerät, das beim Benutzen regelmäßig durch eine Hand des Benutzers geführt wird. Solche Stabmixer weisen daher bevorzugt ein Gewicht von maximal 5 Kilogramm auf. Der Stabmixer kann ein Gehäuse aufweisen, das insbesondere zumindest teilweise aus Kunststoff und/oder Metall besteht. Weiterhin kann der Stabmixer, insbesondere an einem längsseitigen Ende des Gehäuses, einen Schneidkopf aufweisen. Das Messer ist im Bereich des Schneidkopfs insbesondere an einer Antriebswelle des Stabmixers befestigbar.

Bei einem Standmixer handelt es sich um ein Standgerät, gebildet mit oder bestehend aus einem Standfuß mit einem daran befestigten und abgeschlossenen Behälter aus Edelstahl, Glas oder transparentem Kunststoff. Das Messer ist beim Standmixer am Grund des Behälters angeordnet und mittels Kupplung durch den Elektromotor im Standfuß in (schnelle) Rotation versetzbar.

Durch die Antriebswelle bzw. Kupplung ist das Messer, beispielsweise mit einer Drehzahl von 0 bis 20.000 U/min (Umdrehungen pro Minute), um eine Drehachse des Messers rotierbar. Das Messer besteht insbesondere zumindest teilweise aus (gehärtetem) Metall oder Metallblech. Das Metall oder Metallblech kann insbesondere 0,1 bis 0,5 Gew.-% (Gewichtsprozent) Kohlenstoff, bevorzugt (circa) 0,2 Gew.-% Kohlenstoff, und/oder insbesondere eine Härte von 42 bis 46 HRC (Härte nach Rockwell, Skala C) aufweisen.

Das Messer umfasst zumindest eine Klinge. Bevorzugt weist das Messer zwei, drei oder vier Klingen auf. Die zumindest eine Klinge erstreckt sich von der Drehachse des Messers insbesondere in eine radiale Richtung. Weist das Messer eine Mehrzahl von Klingen auf, sind die Klingen bevorzugt gleichmäßig um die Drehachse verteilt angeordnet. Bei einem Messer mit zwei Klingen können die Klingen beispielsweise um 180° versetzt um die Drehachse angeordnet sein. Ein Messer mit zwei gegenüberliegenden Klingen kann einteilig bzw. einstückig ausgebildet sein. Bei einem Messer mit drei Klingen können die Klingen beispielsweise um 120° versetzt um die Drehachse angeordnet sein. Bei einem Messer mit vier Klingen können die Klingen beispielsweise um 90° versetzt um die Drehachse angeordnet sein. Ein Messer mit 2 X 2 gegenüberliegenden Klingen kann einteilig bzw. einstückig oder auch aus zwei Messerelementen mit je zwei Klingen ausgebildet sein. Jede Klinge kann zumindest eine Schneide aufweisen. Bei der zumindest einen Schneide handelt es sich insbesondere um eine scharfe bzw. geschärfte Kante der zumindest einen Klinge.

Die Klinge erstreckt sich im Wesentlichen in radialer oder lateraler Richtung ausgehend von der Drehachse. Es kann vorgesehen sein, dass sich die Klinge vom zentralen Bereich der Drehachse bis hin zum außen liegenden Rand (in Umfangs- bzw. Breitenrichtung betrachtet) verjüngt. Die Wellen können jeweils ein lokales Maximum und Minimum einer Breite der Klinge ausbilden.

In der zumindest einen Schneide sind eine Mehrzahl von Wellen (ggf. auch als Ausbuchtung zu bezeichnen) ausgebildet. Die Anzahl der Wellen pro Schneide bzw. Klinge ist bevorzugt kleiner 10, insbesondere kleiner 5 und bevorzugt 2, 3 oder 4. Bevorzugt haben alle Schneiden des Messers dieselbe Anzahl von Wellen.

Die Welle entläuft entlang der Klinge, wenn auf das Messer draufgesehen wird, also in Richtung der Drehachse des Messers. Die Wellen ragen bogenförmig in die zumindest eine Schneide hinein. Bereiche der Schneide, die nicht von den Wellen überdeckt werden, stehen gegenüber der Welle, insbesondere in eine Umfangsrichtung des Messers, vor. Eine Schneidkante der zumindest einen Schneide verläuft im Bereich der Wellen wellenförmig. Zudem verlaufen die Wellen insbesondere weder teilkreisförmig, d. h. insbesondere nicht mit einem konstanten Krümmungsradius, noch sinusförmig. Zudem sind die Wellen einer Klinge insbesondere nicht spiegelsymmetrisch ausgebildet. Weiterhin verlaufen die Wellen insbesondere senkrecht zur Drehachse. Die Wellen sind insbesondere geschärft und/oder in die zumindest eine Schneide geschliffen.

Die einzelnen Wellen sind jeweils voneinander durch einen flachen Abschnitt der zumindest einen Schneide beabstandet. Der zumindest eine flache Abschnitt ist insbesondere nicht wellenförmig ausgebildet. Der zumindest eine flache Abschnitt ist insbesondere nicht oder weniger geschärft (stumpfer) als ein anderer Bereich der Klinge ausgebildet. Die Schneidkante des flachen Abschnitts kann abgerundet sein, beispielsweise durch Bürsten mit Polierpaste. Die durchschnittliche Verrundung beträgt (in der Regel) nicht mehr als 0,25 mm.

Der flache Abschnitt weist so vorteilhafterweise eine hohe Kantenstabilität auf. Weiterhin kann der zumindest eine flache Abschnitt zumindest einen planen Bereich bzw. einen plan geschliffenen Bereich aufweisen. Im Bereich des flachen Abschnitts kann die zumindest eine Schneide insbesondere eine (von oben/unten betrachtet) gerade Schneidkante aufweisen. Die Schneidkanten aller flachen Abschnitte einer einzelnen Klinge können zueinander insbesondere parallel verlaufen und/oder fluchten.

Das Schneidgut kann beim Auftreffen auf den flachen Abschnitt während des Betriebs des Stabmixers im Vergleich zu den Wellen insbesondere stärker zerschlagen als geschnitten werden. Die flachen Abschnitte sorgen (allenfalls) für einen Vorschnitt von hartem Schnittgut und veranlassen eine Umlenkung des Schneidguts hin zu den Wellen.

Der flache Abschnitt der zumindest einen Schneide kann eine geringere Schärfe aufweisen als die Wellen. Insbesondere kann der flache Abschnitt eine größere Schneidendicke bzw. Watendicke als die Wellen oder eine abgerundete Schneidkante aufweisen. Bei der Schneidendicke bzw. Watendicke handelt es sich insbesondere um eine Dicke der Schneidkante der zumindest einen Schneide. Je geringer die Schneidendicke bzw. Watendicke ist, desto schärfer ist die zumindest eine Schneide.

Die Wellen können eine erste Schneidendicke von maximal 0,2 mm (Millimeter) aufweisen. Der flache Abschnitt kann eine zweite Schneidendicke von 0,2 bis 1,0 mm aufweisen. Insbesondere weisen die Wellen eine erste Schneidendicke zwischen 0 und 0,2 mm, bevorzugt 0 mm auf. Unabhängig davon oder in Kombination weist der flache Abschnitt insbesondere eine zweite Schneidendicke von 0,2 bis 0,6 mm oder bevorzugt 0,2 bis 0,4 mm auf.

Die Kombination aus scharf geschliffenen Wellenbereichen und stumpferen bzw. abgerundeten Schneidkanten der flachen Abschnitte ermöglicht insgesamt eine hohe Schneidkantenstabilität und verhindert einen Bruch des Messers. Vorteilhafterweise wird somit eine hohe Schneidleistung bei gleichzeitig hoher Betriebssicherheit erreicht.

Die Wellen können von einem radial innenliegenden Wellenstartpunkt zu einem radial außenliegenden Wellenendpunkt verlaufen, wobei ein erster Abstand zwischen dem Wellenstartpunkt und einem Scheitelpunkt der Welle kleiner ist als ein zweiter Abstand zwischen dem Scheitelpunkt und dem Wellenendpunkt. Der Wellenstartpunkt und der Wellenendpunkt liegen insbesondere auf einer Schneidkante der Schneide. Bei dem Wellenstartpunkt handelt es sich insbesondere um denjenigen Punkt, an dem der wellenförmige Bereich einer Welle beginnt, und bei dem Wellenendpunkt insbesondere um denjenigen Punkt, an dem der wellenförmige Bereich der Welle endet. Der Wellenstartpunkt liegt näher an der Drehachse als der Wellenendpunkt. Bei dem Scheitelpunkt der Welle handelt es sich insbesondere um denjenigen Punkt der Welle, bei dem die Welle ihre maximale Tiefe aufweist. Weiterhin kann die Welle im Scheitelpunkt insbesondere ihren kleinsten Krümmungsradius aufweisen. Der Krümmungsradius der Welle kann, ausgehend von dem Scheitelpunkt, in Richtung des Wellenstartpunkts geringer steigen als in Richtung des Wellenendpunkts. Bei der Tiefe handelt es sich insbesondere um einen senkrechten Abstand zwischen einer (gedachten) geraden Verbindungslinie, die insbesondere zwischen dem Wellenstartpunkt und dem Wellenendpunkt verläuft, und der Welle. Ein erster Abstand zwischen dem Wellenstartpunkt und dem Scheitelpunkt ist kleiner als ein zweiter Abstand zwischen dem Scheitelpunkt und dem Wellenendpunkt.

Die Wellen können am Wellenstartpunkt eine erste Steigung und am Wellenendpunkt eine zweite Steigung aufweisen, wobei sich der Betrag der ersten Steigung von dem Betrag der zweiten Steigung unterscheidet. Der Begriff "Betrag" wird hier im üblichen mathematischen Sinne als Abstand zur Null ("0") verstanden.

Eine einen ersten Mittelpunkt zwischen dem Wellenstartpunkt und dem Scheitelpunkt berührende erste Tangente kann eine Mittelachse der zumindest einen Klinge mit einem ersten Winkel und eine einen zweiten Mittelpunkt zwischen dem Scheitelpunkt und dem Wellenendpunkt berührende zweite Tangente die Mittelachse mit einem zweiten Winkel schneiden. Der Begriff "Tangente" wird hier ebenfalls im üblichen mathematischen Sinne verstanden. Der erste Mittelpunkt befindet sich auf der Welle genau zwischen dem Wellenstartpunkt und dem Scheitelpunkt. Dies kann insbesondere bedeuten, dass der erste Mittelpunkt den gleichen Abstand zu dem Wellenstartpunkt wie zu dem Scheitelpunkt aufweist. Der zweite Mittelpunkt befindet sich auf der Welle genau zwischen dem Scheitelpunkt und dem Wellenendpunkt. Dies kann insbesondere bedeuten, dass der zweite Mittelpunkt den gleichen Abstand zu dem Scheitelpunkt wie zu dem Wellenendpunkt aufweist. Bei der ersten Tangente handelt es sich insbesondere um eine gedachte Gerade, die die Schneidkante der Welle im ersten Mittelpunkt berührt. Die den ersten Mittelpunkt berührende erste Tangente der Welle schneidet die Mittelachse der Klinge mit einem ersten Winkel. Bei der zweiten Tangente handelt es sich insbesondere um eine gedachte Gerade, die die Schneidkante der Welle im zweiten Mittelpunkt berührt. Die den zweiten Mittelpunkt berührende zweite Tangente der Welle schneidet die Mittelachse der Klinge mit einem zweiten Winkel.

Der erste Winkel kann größer sein als der zweite Winkel.

Der erste Winkel kann größer 50° und kleiner 90° sein. Bevorzugt beträgt der erste Winkel 60° bis kleiner 90°, besonders bevorzugt 70° bis kleiner 90°.

Der zweite Winkel kann 10° bis 45° betragen.

Durch die vorgeschlagene Ausgestaltung des ersten Winkels und des zweiten Winkels wird erreicht, dass das Schneidgut im Bereich der Wellen zwischen dem Scheitelpunkt und dem Wellenendpunkt in einem (annähernd) rechten Winkel auftreffen, sodass eine sehr hohe Schneidleistung des Messers erzielt wird. Zudem ist der Bereich der Wellen zwischen dem Scheitelpunkt und dem Wellenstartpunkt kleiner als der Bereich der Wellen zwischen dem Scheitelpunkt und dem Wellenendpunkt. Das Kleinhalten des Bereichs zwischen dem Scheitelpunkt und dem Wellenstartpunkt wirkt sich ebenfalls positiv auf die Schneidleistung des Messers aus, weil das Schneidgut in dem Bereich zwischen dem Scheitelpunkt und dem Wellenstartpunkt nur in einem spitzen Winkel auf die Schneide auftrifft.

Eine Tiefe der Wellen kann maximal 50 % einer Wellenbreite der Wellen entsprechen. Bei der Tiefe handelt es sich insbesondere um einen senkrechten Abstand zwischen einer (gedachten) geraden Verbindungslinie, die zwischen dem Wellenstartpunkt und dem Wellenendpunkt verläuft, und der Welle. Die Wellenbreite erstreckt sich insbesondere von dem Wellenstartpunkt bis zu dem Wellenendpunkt.

Die Klinge kann plan, gebogen und/oder (teilweise) genickt ausgeführt sein. Es ist insbesondere möglich, dass im Bereich (in Umfangsrichtung) benachbart zur Schneide eine einheitliche Krümmung oder Ebene ausgebildet ist, wobei im Bereich nahe der Drehachse und/oder im Bereich nahe dem äußeren Rande eine andere Krümmung und/oder Orientierung der Klinge ausgebildet ist. Der äußere Rand der Klinge kann mit einem nach oben oder unten umgebogenen Flügel ausgeführt sein.

Die Tiefe der Welle beträgt bevorzugt zumindest 2 mm, insbesondere zwischen 2,8 mm und 3,7 mm.

Die Wellenbreite der Welle beträgt bevorzugt zumindest 5 mm, insbesondere zwischen 6 mm und 10 mm.

Bevorzugt weisen die Wellen einer Schneide stets dasselbe Verhältnis von Tiefe zu Wellenbreite auf. Das Verhältnis Tiefe/Wellenbreite liegt bevorzugt in einem Bereich von 0,3 bis 0,5, insbesondere im Bereich von 0,35 bis 0,4.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein Stabmixer in einer Seitenansicht;
- Fig. 2:: ein Messer in einer Draufsicht;
- Fig. 3:: eine Welle einer Schneide des Messers in einer vergrößerten Darstellung;
- Fig. 4:: eine erste Variante der Welle mit einer Schneidendicke > 0 mm in einer Schnittdarstellung;

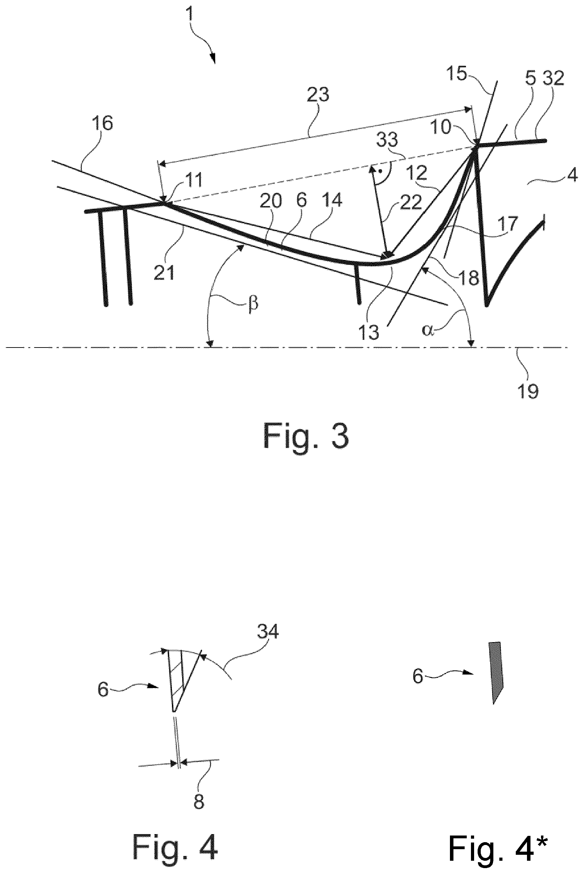

- Fig. 4*:: eine zweite Variante der Welle mit einer Schneidendicke = 0 mm in einer Schnittdarstellung;

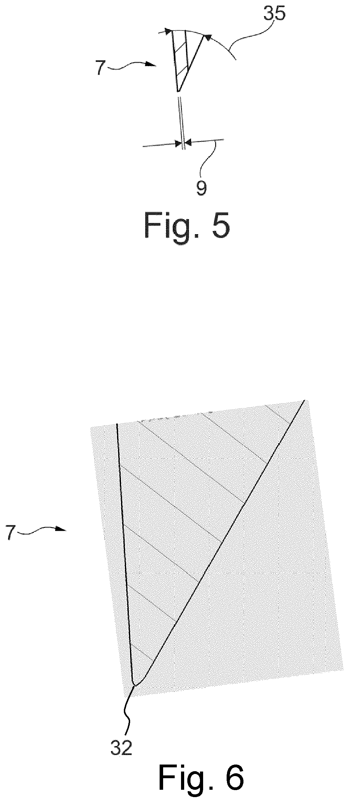

- Fig. 5:: eine erste Variante eines flachen Abschnitts der Schneide mit einer Schneidendicke > 0 mm in einer Schnittdarstellung; und
- Fig. 6:: eine zweite Variante eines flachen Abschnitts der Schneide mit abgerundeter Schneidkante in einer Schnittdarstellung.

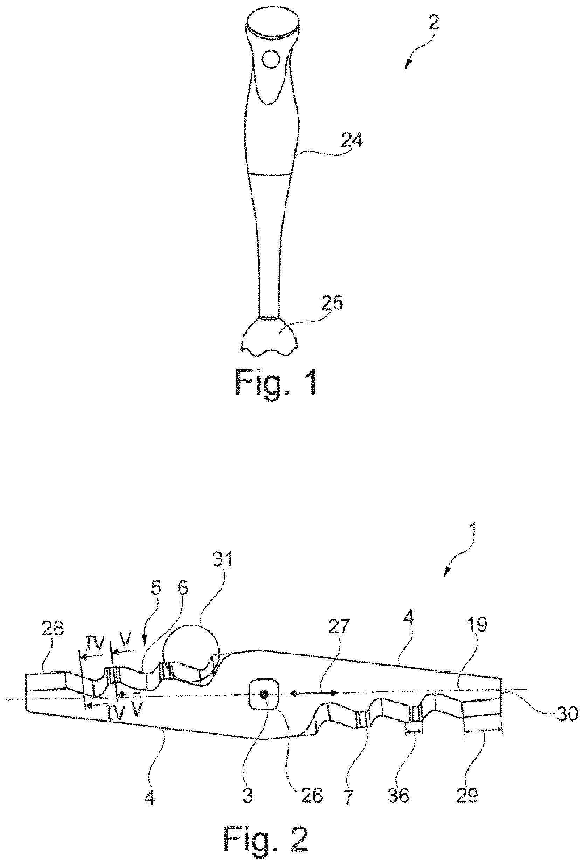

Die Fig. 1 zeigt als beispielhaftes Anwendungsgebiet des erfindungsgemäßen Messers einen Stabmixer 2 in einer Seitenansicht. Der Stabmixer 2 umfasst ein Gehäuse 24 mit einem Schneidkopf 25. In dem Schneidkopf 25 ist ein hier nicht sichtbares Messer 1 angeordnet, dass während des Betriebs des Stabmixers 2 durch einen Antrieb des Stabmixers 2 zum Zerkleinern eines Schneidguts rotierbar ist.

Die Fig. 2 zeigt das Messer 1 in einer Draufsicht, d. h. in der Fig. 2 von unten nach oben. Das Messer 1 weist in ihrem Zentrum eine Öffnung 26 für eine Antriebswelle des in der Figur 1 gezeigten Stabmixers 2 auf, durch die das Messer 1 um eine Drehachse 3 rotierbar ist. Die Drehachse 3 verläuft hier senkrecht zur Zeichnungsebene. Von der Drehachse 3 erstrecken sich bei der hier gezeigten Ausführungsvariante zwei Klingen 4 in zwei entgegengesetzte radiale Richtungen 27. Die Klingen 4 weisen eine Mittelachse 19 auf. Die Mittelachse 19 verläuft hier durch die Drehachse 3 und mittig durch die Klingen 4. An jeder Klinge 4 ist eine Schneide 5 ausgebildet, die bei der hier gezeigten Ausführungsvariante jeweils drei Wellen 6 aufweisen. Die Wellen 6 sind in die Schneiden 5 geschliffen und in der radialen Richtung 27 voneinander durch flache Abschnitte 7 der Schneide 5 beabstandet. Die flachen Abschnitte 7 weisen eine Abschnittsbreite 36 auf, die hier 3 mm beträgt. Die Wellen 6 sind daher untereinander mit der Abschnittsbreite 36 voneinander beabstandet. Weiterhin weisen die Schneiden 5 jeweils einen flachen Endbereich 28 mit einer Entbereichsbreite 29 von mindestens 5 mm auf. Der flache Endbereich 28 erstreckt sich von der radial äußersten Welle 6 bis zu einer Spitze 30 der Klingen 4. Die Spitzen 30 der Klingen 4 können entgegen der in der Fig. 2 gezeigten Ausführungsvariante auch nach oben gebogen sein.

Die Fig. 3 zeigt eine vergrößerte Darstellung der Welle 6 in dem in der Fig. 2 markierten Bereich 31 der Klinge 4. Die Welle 6 erstreckt sich von einem radial innenliegenden Wellenstartpunkt 10 zu einem radial außenliegenden Wellenendpunkt 11. Der Wellenstartpunkt 10 und der Wellenendpunkt 11 liegen auf einer Schneidkante 32 der Schneide 5. Weiterhin weist die Welle 6 einen Scheitelpunkt 13 auf. Der Scheitelpunkt 13 ist derjenige Punkt der Welle 6, bei dem die Welle 6 ihre maximale Tiefe 22 aufweist. Weiterhin weist die Welle 6 im Scheitelpunkt 13 ihren kleinsten Krümmungsradius auf. Der Krümmungsradius der Welle 6 steigt ausgehend von dem Scheitelpunkt 13 in Richtung des Wellenstartpunkts 10 geringer als in Richtung des Wellenendpunkts 11. Bei der Tiefe 22 handelt es sich um den senkrechten Abstand zwischen einer Verbindungslinie 33, die zwischen dem Wellenstartpunkt 10 und dem Wellenendpunkt 11 verläuft, und der Welle 6. Ein erster Abstand 12 zwischen dem Wellenstartpunkt 10 und dem Scheitelpunkt 13 ist kleiner als ein zweiter Abstand 14 zwischen dem Scheitelpunkt 13 und dem Wellenendpunkt 11. Zudem weist die Welle 6 eine Wellenbreite 23 auf, die sich von dem Wellenstartpunkt 10 bis zu dem Wellenendpunkt 11 erstreckt.

Die Welle 6 weist am Wellenstartpunkt 10 in Bezug auf die Verbindungslinie 33 und/oder die Schneidkante 32 eine erste Steigung 15 und am Wellenendpunkt 11 in Bezug auf die Verbindungslinie 33 und/oder die Schneidkante 32 eine zweite Steigung 16 auf. Der Betrag der ersten Steigung 15 ist größer als der Betrag der zweiten Steigung 16.

Weiterhin weist die Welle 6 einen ersten Mittelpunkt 17 und einen zweiten Mittelpunkt 20 auf. Der erste Mittelpunkt 17 befindet sich auf der Welle 6 genau zwischen dem Wellenstartpunkt 10 und dem Scheitelpunkt 13. Mit anderen Worten bedeutet dies, dass der erste Mittelpunkt 17 den gleichen Abstand zu dem Wellenstartpunkt 10 wie zu dem Scheitelpunkt 13 aufweist. Der zweite Mittelpunkt 20 befindet sich auf der Welle 6 genau zwischen dem Scheitelpunkt 13 und dem Wellenendpunkt 11. Mit anderen Worten bedeutet dies, dass der zweite Mittelpunkt 20 den gleichen Abstand zu dem Scheitelpunkt 13 wie zu dem Wellenendpunkt 11 aufweist. Eine den ersten Mittelpunkt 17 berührende erste Tangente 18 der Welle 6 schneidet die Mittelachse 19 der Klinge 4 mit einem ersten Winkel α. Eine den zweiten Mittelpunkt 20 berührende zweite Tangente 21 der Welle 6 schneidet die Mittelachse 19 der Klinge 4 mit einem zweiten Winkel β. Der erste Winkel α beträgt hier 60° und der zweite Winkel β 17°. Das hier nicht gezeigte Schneidgut trifft dadurch bei der Rotation des Messers 1 annähernd mit 90° auf den Abschnitt der Welle 6 zwischen dem Scheitelpunkt 13 und dem Wellenendpunkt 11, wodurch eine hohe Schneidleistung des Messers 1 erzielbar ist.

Die Fig. 4 zeigt einen Schnitt durch eine erste Variante der Welle 6 entlang der in der Fig. 2 gezeigten Schnittlinie IV-IV. Die Welle 6 weist eine erste Schneidendicke 8 von 0,1 mm und einen ersten Schneidwinkel 34 von 33° auf.

Die Fig. 4* zeigt einen Schnitt durch eine zweite Variante der Welle 6 entlang der in der Fig. 2 gezeigten Schnittlinie IV-IV. Die Welle 6 weist eine erste Schneidendicke 8 von 0 mm und damit eine maximal scharf geschliffene Schneide auf.

Die Fig. 5 zeigt einen Schnitt durch eine erste Variante des flachen Abschnitts 7 entlang der in der Fig. 2 gezeigten Schnittlinie V-V. Der flache Abschnitt 7 weist eine zweite Schneidendicke 9 von 0,4 mm und einen zweiten Schneidwinkel 35 von 28° auf.

Die Fig. 6 zeigt einen Schnitt durch eine zweite Variante des flachen Abschnitts 7 entlang der in der Fig. 2 gezeigten Schnittlinie V-V. Der flache Abschnitt 7 weist eine abgerundete Schneidkante 32 auf.

Das Messer zeichnet sich sowohl durch eine besonders hohe Betriebssicherheit als auch durch eine besonders hohe Schneidleistung aus.

### Bezugszeichenliste

- 1: Messer
- 2: Stabmixer
- 3: Drehachse
- 4: Klinge
- 5: Schneide
- 6: Welle
- 7: flacher Abschnitt
- 8: erste Schneidendicke
- 9: zweite Schneidendicke
- 10: Wellenstartpunkt
- 11: Wellenendpunkt
- 12: erster Abstand
- 13: Scheitelpunkt
- 14: zweiter Abstand
- 15: erste Steigung
- 16: zweite Steigung
- 17: erster Mittelpunkt
- 18: erste Tangente
- 19: Mittelachse
- 20: zweiter Mittelpunkt
- 21: zweite Tangente
- 22: Tiefe
- 23: Wellenbreite
- 24: Gehäuse
- 25: Schneidkopf
- 26: Öffnung
- 27: radiale Richtung
- 28: Endbereich
- 29: Endbereichsbreite
- 30: Spitze
- 31: Bereich
- 32: Schneidkante
- 33: Verbindungslinie
- 34: erster Schneidwinkel
- 35: zweiter Schneidwinkel
- 36: Abschnittsbreite
- α: erster Winkel
- β: zweiter Winkel

## Patentansprüche

1. Messer (1) für einen Mixer zumindest aufweisend:
- eine Drehachse (3),
- zumindest eine Klinge (4), die sich ausgehend von der Drehachse (3) erstreckt und zumindest eine Schneide (5) aufweist, und
- eine Mehrzahl von Wellen (6), die in der zumindest einen Schneide (5) ausgebildet sind, wobei die einzelnen Wellen (6) voneinander jeweils durch einen flachen Abschnitt (7) der zumindest einen Schneide (5) beabstandet sind,
**dadurch gekennzeichnet, dass**
der flache Abschnitt (7) der zumindest einen Schneide (5) eine geringere Schärfe aufweist als die Wellen (6).

2. Messer (1) nach dem vorhergehenden Patentanspruch, wobei die Wellen (6) eine erste Schneidendicke (8) von maximal 0,2 mm und der flache Abschnitt (7) eine zweite Schneidendicke (9) von 0,2 bis 1,0 mm aufweisen.

3. Messer (1) nach einem der vorhergehenden Patentansprüche, wobei die Wellen (6) von einem radial innenliegenden Wellenstartpunkt (10) zu einem radial außenliegenden Wellenendpunkt (11) verlaufen und wobei ein erster Abstand (12) zwischen dem Wellenstartpunkt (10) und einem Scheitelpunkt (13) der Welle (6) kleiner ist als ein zweiter Abstand (14) zwischen dem Scheitelpunkt (13) und dem Wellenendpunkt (11).

4. Messer (1) nach Patentanspruch 3, wobei die Wellen (6) am Wellenstartpunkt (10) eine erste Steigung (15) und am Wellenendpunkt (11) eine zweite Steigung (16) aufweisen und wobei sich der Betrag der ersten Steigung (15) von dem Betrag der zweiten Steigung (16) unterscheidet.

5. Messer (1) nach Patentanspruch 3 oder 4, wobei eine einen ersten Mittelpunkt (17) zwischen dem Wellenstartpunkt (10) und dem Scheitelpunkt (13) berührende erste Tangente (18) eine Mittelachse (19) der zumindest einen Klinge (4) mit einem ersten Winkel (α) und eine einen zweiten Mittelpunkt (20) zwischen dem Scheitelpunkt (13) und dem Wellenendpunkt (11) berührende zweite Tangente (21) die Mittelachse (19) mit einem zweiten Winkel (β) schneiden.

6. Messer (1) nach Patentanspruch 5, wobei der erste Winkel (α) größer ist als der zweite Winkel (β).

7. Messer (1) nach Patentanspruch 5 oder 6, wobei der erste Winkel (α) größer 50° und kleiner 90° ist.

8. Messer (1) nach einem der Patentansprüche 5 bis 7, wobei der zweite Winkel (β) 10° bis 45° aufweist.

9. Messer (1) nach einem der vorhergehenden Patentansprüche, wobei eine Tiefe (22) der Wellen (6) maximal 50 % einer Wellenbreite (23) der Wellen (6) entspricht.

10. Messer (1) nach einem der vorhergehenden Patentansprüche, wobei der flache Abschnitt (7) der zumindest einen Schneide (5) eine abgerundete Schneidkante (32) aufweist.

## Claims

1. Blade (1) for a blender, at least having:
- a rotation axis (3);
- at least one knife (4) which extends so as to proceed from the rotation axis (3) and has at least one cutter (5); and
- a plurality of serrations (6) which are configured in the at least one cutter (5), wherein the individual serrations (6) are in each case mutually spaced apart by a flat portion (7) of the at least one cutter (5);
**characterized in that**
the flat portion (7) of the at least one cutter (5) has a sharpness that is inferior to that of the serrations (6).

2. Blade (1) according to the preceding patent claim, wherein the serrations (6) have a first cutter thickness (8) of at most 0.2 mm, and the flat portion (7) has a second cutter thickness (9) of 0.2 to 1.0 mm.

3. Blade (1) according to one of the preceding patent claims, wherein the serrations (6) run from a radially inward serration starting point (10) to a radially outward serration finishing point (11), and wherein a first spacing (12) between the serration starting point (10) and an apex (13) of the serration (6) is smaller than a second spacing (14) between the apex (13) and the serration finishing point (11).

4. Blade (1) according to Patent Claim 3, wherein the serrations (6) at the serration starting point (10) have a first gradient (15), and at the serration finishing point (11) have a second gradient (16), and wherein the value of the first gradient (15) differs from the value of the second gradient (16).

5. Blade (1) according to Patent Claim 3 or 4, wherein a first tangent (18) that contacts a first center (17) between the serration starting point (10) and the apex (13) intersects a central axis (19) of the at least one knife (4) so as to form a first angle (α), and a second tangent (21) that contacts a second center (20) between the apex (13) and the serration finishing point (11) intersects the central axis (19) so as to form a second angle (β).

6. Blade (1) according to Patent Claim 5, wherein the first angle (α) is larger than the second angle (β).

7. Blade (1) according to Patent Claim 5 or 6, wherein the first angle (α) is more than 50° and less than 90°.

8. Blade (1) according to one of Patent Claims 5 to 7, wherein the second angle (β) is 10° to 45°.

9. Blade (1) according to one of the preceding patent claims, wherein a depth (22) of the serrations (6) corresponds to at most 50% of a serration width (23) of the serrations (6).

10. Blade (1) according to one of the preceding patent claims, wherein the flat portion (7) of the at least one cutter (5) has a radiused cutting edge (32).

## Revendications

1. Couteau (1) pour un mixeur comprenant au moins:
- un axe de rotation (3),
- au moins une lame (4), qui s'étend à partir de l'axe de rotation (3) et présente au moins une arête tranchante (5), et
- une pluralité d'ondulations (6), qui sont formées dans l'au moins une arête tranchante (5), les ondulations individuelles (6) étant espacées les unes des autres par une section plate (7) de l'au moins une arête tranchante (5),
**caractérisé en ce que**
la section plate (7) de l'au moins une arête tranchante (5) présente un tranchant plus faible que les ondulations (6).

2. Couteau (1) selon la revendication précédente, dans lequel les ondulations (6) présentent une première épaisseur d'arête tranchante (8) de 0,2 mm au maximum et la section plate (7) une deuxième épaisseur d'arête tranchante (9) de 0,2 à 1,0 mm.

3. Couteau (1) selon l'une quelconque des revendications précédentes, dans lequel les ondulations (6) s'étendent d'un point de début d'ondulation (10) situé radialement à l'intérieur à un point de fin d'ondulation (11) situé radialement à l'extérieur, et dans lequel une première distance (12) entre le point de début d'ondulation (10) et un sommet (13) de l'ondulation (6) est inférieure à une deuxième distance (14) entre le sommet (13) et le point de fin d'ondulation (11).

4. Couteau (1) selon la revendication 3, dans lequel les ondulations (6) présentent une première pente (15) au point de début de l'ondulation (1D) et une deuxième pente (16) au point de fin d'ondulation (11), et dans lequel le montant de la première pente (15) est différent du montant de la deuxième pente (16).

5. Couteau (1) selon la revendication 3 ou 4, dans lequel une première tangente (18) en contact avec un premier point central (17) entre le point de début d'ondulation (10) et le sommet (13) coupe un axe central (19) de l'au moins une lame (4) selon un premier angle (α) et une deuxième tangente (21) en contact avec un deuxième point central (20) entre le sommet (13) et le point de fin d'ondulation (11) coupe l'axe central (19) selon un deuxième angle (β).

6. Couteau (1) selon la revendication 5, dans lequel le premier angle (α) est supérieur au deuxième angle (β).

7. Couteau (1) selon la revendication 5 ou 6, dans lequel le premier angle (α) est supérieur à 50° et inférieur à 90°.

8. Couteau (1) selon l'une quelconque des revendications 5 à 7, dans lequel le deuxième angle (β) est de 10° à 45°.

9. Couteau (1) selon l'une quelconque des revendications précédentes, dans lequel une profondeur (22) des ondulations (6) correspond à 50 % au maximum d'une largeur d'ondulation (23) des ondulations (6).

10. Couteau (1) selon l'une quelconque des revendications précédentes, dans lequel la section plate (7) de l'au moins une arête tranchante (5) présente un bord d'arête tranchante arrondi (32).
